# EUROPÄISCHE PATENTSCHRIFT

(11) **EP 0 384 918 B1**
(45) Veröffentlichungstag und Bekanntmachung des Hinweises auf die Patenterteilung: **24.08.1994**
(21) Anmeldenummer: 89103170.0
(22) Anmeldetag: 23.02.1989
(51) Int. Cl.: H04L 7/02

(54) **Verfahren und Anordnung zum Anpassen eines Taktes an ein plesiochrones Datensignal und zu dessen Abtakten mit dem angepassten Takt**
Method and device for the synchronisation of a clock with a plesiochronous data signal and for sampling with the synchronised clock
Procédé et dispositif de synchronisation d'une horloge par rapport à un signal de données plésiochrone et d'échantillonnage par horloge synchronisée

(43) Veröffentlichungstag der Anmeldung: 05.09.1990
(73) Patentinhaber: SIEMENS AKTIENGESELLSCHAFT, 80333 München (DE)
(72) Erfinder: Krämer, Horst, Dipl.-Ing., D-8018 Grafing (DE); Klinger, Karlheinz, Dipl.-Ing., D-8000 München 70 (DE)

(56) Entgegenhaltungen:
- WO-A-88/05236
- GB-A- 2 069 263

## Beschreibung

Die Erfindung bezieht sich auf ein Verfahren und eine Anordnung zum Anpassen eines Taktes mit beliebiger Phasenlage und einem Tastverhältnis 1:1 ± 10 % an ein plesiochrones spikefreies Datensignal und zum Abtakten dieses Datensignals mit einem angepaßten Takt.

In größeren digitalen Nachrichtenübertagungssystemen wird es bei höheren Bitraten wie 139,264 oder 155,52 Mbit/s zunehmend schwieriger, ein geeignetes Taktverteilersystem für einen taktsynchronen Betrieb aufzubauen. Werden nun aber die benötigten Takte durch verteilte Taktgeneratoren mit nominell gleicher Frequenz bei einer Genauigkeit größer 10⁻⁴ lokal erzeugt, so stellt sich das Problem, daß die ankommenden plesiochronen Datensignale auf den lokalen Takt aufsynchronisiert werden müssen.

Die ältere europäische Patentanmeldung EP-A1-0 363 513, veröffentlicht am 18.04.90, betrifft ein Verfahren zum Empfang eines binären Datensignals, das auch Phasensprünge aufweisen darf, unter Verwendung eines Taktes, dessen Frequenz plesiochron oder gleich zur Bitrate des Datensignals und dessen Phasendifferenz gegenüber dem Datensignal beliebig ist. Aus dem Takt wird über eine Laufzeitkette eine Folge von etwa gleiche Phasenabstände aufweisenden Takten gebildet, aus denen kurze Impulse abgeleitet werden. Beim Eintreffen jeder als wirksam ausgewählten Flanke eines Datensignals wird ein eventuell verzögerter Abfrageimpuls abgeleitet, mit dem über UND-Gatter ein Vorhandensein von Impulsen abgefragt wird. Sind solche vorhanden, dann werden über SR-Flipflops und UND-Gatter ausgewählte Takte durchgeschaltet und ODER-verknüpft als Einlesetakt verwendet. Die Gesamtlaufzeit dieser Verfahrensschritte wird gegebenenfalls durch eine Verzögerung derart kompensiert, daß die wirksame Flanke des Einlesetaktes stets eine halbe Taktperiode nach der wirksamen Flanke des Datensignals auftritt.

Aus der GB-A-2 069 263 ist eine Anordnung zur Anpassung eines lokalen Taktsignals an ein Dateneingangssignal bekannt. Unter Verwendung einer Laufzeitkette mit mehreren Verzögerungselementen werden Taktsignale mit jeweils um 90° zueinander verschobenen Phasenlagen erzeugt. Eine Erkennungsschaltung legt fest, welches der erzeugten Taktsignale mit seiner Taktflanke am nächsten zur Taktflanke des Dateneingangssignals liegt. Das ermittelte Taktsignal wird schließlich durch Ansteuerung eines zugehörigen Schalters auf eine Ausgangstaktleitung durchgeschaltet.

Der Erfindung liegt die Aufgabe zugrunde, ein Verfahren anzugeben, das in einer einfacheren Anordnung durchgeführt werden kann und sich insbesondere zur Anwendung in integrierten Schaltungen eignet.

Diese Aufgabe wird erfindungsgemäß mit den Verfahrensschritten nach dem Patentanspruch 1 gelöst. Eine entsprechende Anordnung zur Lösung der Aufgabe ist dem Patentanspruch 3 zu entnehmen. Vorteilhafte Ausgestaltungen hinsichtlich des Verfahrens und der Anordnung sind in den abhängigen Ansprüchen enthalten.

Anhand von Ausführungsbeispielen wird die Erfindung nachstehend näher erläutert:
- Fig.1: zeigt eine erfindungsgemäße Anordnung,
- Fig.2: zeigt eine Logik für die Anordnung nach Fig.1,
- Fig.3 bis 6: zeigen Pulsdiagramme zur Erläuterung der Wirkungsweise der Anordnung nach den Fig.1 und 2 und
- Fig.7: zeigt eine ersatzweise in die Anordnung nach Fig.2 einsetzbare UND-Gatter/NAND-Gatter-Kombination.

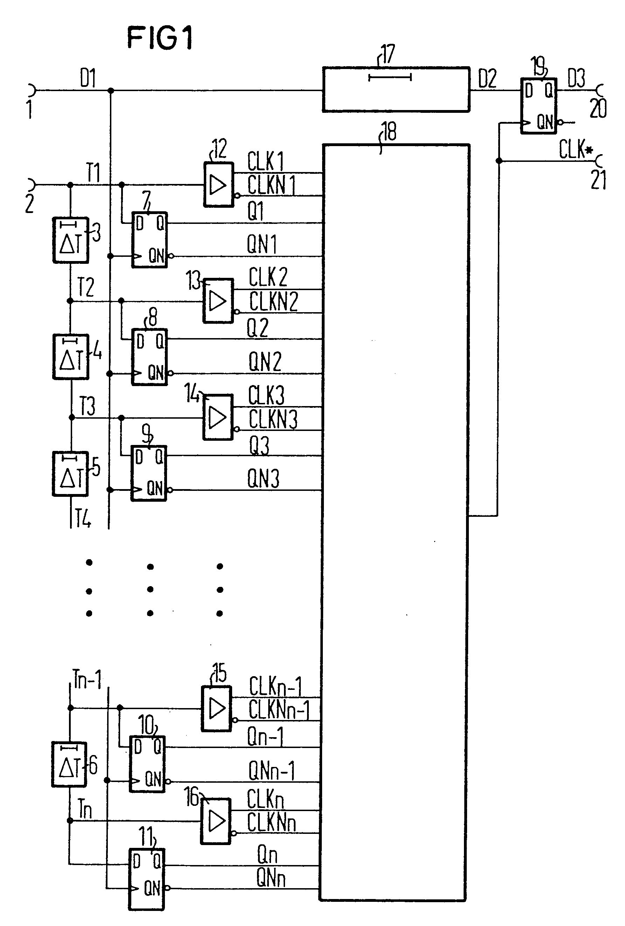

Fig.1 zeigt ein Ausführungsbeispiel der erfindungsgemäßen Anordnung. Diese enthält Laufzeitglieder 3 bis 6 und 17. Flankengesteuerte D-Flipflops 7 bis 11 und 19, Verstärker 12 bis 16 und eine Logik 18.

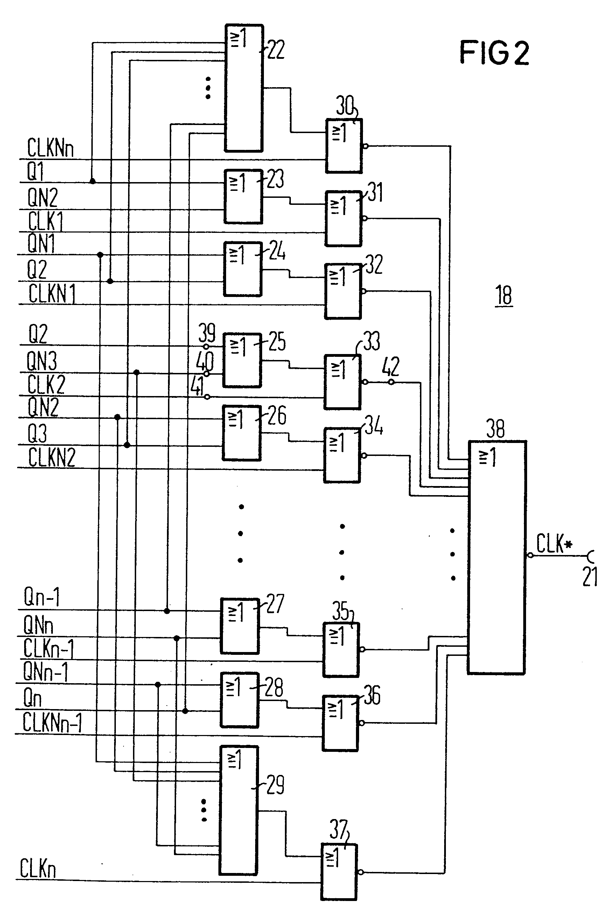

Fig.2 zeigt diese Logik detailliert. Sie enthält ODER-Gatter 22 bis 29 sowie NOR-Gatter 30 bis 38.

In den Datensignaleingang 1 wird ein plesiochrones spikefreies Datensignal D1 eingespeist. Es muß Datenwechsel enthalten, deren als wirksam ausgewählte Flanken einen entsprechend der Frequenzablage zwischen den Datensignalen D1 und dem Takt T1 maximalen Abstand nicht unterschreiten. Dieser Takt T1 mit einer etwa der Nennbitrate des Datensignals D1 entsprechenden Taktfrequenz mit einem Tastverhältnis 1:1 ± 10 % wird in den Takteingang 2 eingespeist und zuerst der Kette aus Laufzeitgliedern 3 bis 6 zugeführt. Diese sind je nach Technologie und Taktfrequenz mit einem oder mehreren Verstärkern oder Invertern realisiert. Diese Kette 3 bis 6 liefert zusammen mit dem eingangsseitigen Takt T1 eine Taktfolge T1 bis Tn, die gleiche Phasenabstände aufweist. Die Summe der Phasenabstände muß wenigstens 60 % einer Taktperiode ausmachen, entsprechend der maximalen Puls- bzw. Pausendauer. Die minimale Verzögerungszeit zwischen zwei Takten beträgt somit mindestens 1/n der maximalen Puls-bzw. Pausendauer des Taktes T1.

Alle Takte T1 bis Tn werden jeweils dem D-Eingang eines flankengetriggerten D-Flipflops 7 bis 11 zugeführt, deren Takteingänge alle mit dem Datensignaleingang 1 verbunden sind. Auf diese Weise werden die Takte T1 bis Tn mit entweder den positiven oder den negativen Flanken des Datensignals D1 abgetaktet. An den Q-Ausgängen der D-Flipflops 7 bis 11 erscheint jeweils der logische Zustand der abgetakteten Takte T1 bis Tn und an den QN-Ausgängen jeweils der invertierte logische Zustand der abgetakteten Takte T1 bis Tn. Die Takte T1 bis Tn werden jeweils einem der Verstärker 12 bis 16 zugeführt, die verstärkte Takte CLK1 bis CLKn und verstärkte invertierte Takte CLKN1 bis CLKNn abgeben. Die von den D-Flipflops 7 bis 11 und den Verstärkern 12 bis 16 abgegebenen Signale werden der Logik 18 zugeführt, die in Fig .2 detailliert dargestellt ist.

Sind die negativen Flanken des Datensignals D1 die wirksamen Flanken, dann treten in der Folge der D-Flipflops 7 bis 11 an den Q-Ausgängen solange Zustände logisch "H" (high) auf, wie die Taktflanken der anliegenden Takte T1 bis Tn der wirksamen Flanke des Datensignals D1 voreilen. Ändert sich dies, dann erhalten die Q-Ausgänge der anschließenden D-Flipflops jeweils einen logischen Zustand "L" (low). Sind die positiven Flanken des Datensignals D1 die wirksamen, dann ist die Folge der logischen Zustände an den Q-Ausgängen der D-Flipflops 7 bis 11 gleich, es wird jedoch der zu dieser Phasenlage invertierte Takt ausgewählt.

Der Zustandswechsel an den Q-Ausgängen sei beispielsweise zwischen den D-Flipflops 9 und 10 und der abgetaktete Takt Q2 habe momentan einen logischen Zustand "L" und der abgetaktete Takt Q3 einen logischen Zustand "H". Der invertierte abgetaktete Takt QN2 hat dann einen logischen Zustand "H" und der invertierte abgetaktete Takt QN3 einen logischen Zustand "L". Bei diesen Verhältnissen weist der Ausgang des ODER-Gatters 25 einen logischen Zustand "L" und der Ausgang des ODER-Gatters 26 einen logischen Zustand "H" auf. Bei dieser Konstellation wird nur der verstärkte Takt CLK2 über das NOR-Gatter 33 und das NOR-Gatter 38 als angepaßter Takt CLK* zum Taktausgang 21 und zum Takteingang des D-Flipflops 19 durchgeschaltet. Hätten der abgetaktete Takt Q2 und der invertierte abgetaktete Takt QN3 logische Zustände "H" und der abgetaktete Takt Q3 und der invertierte abgetaktete Takt QN2 jeweils den Zustand logisch "L" wäre der invertierte verstärkte Takt CLKN2 zum Taktausgang 21 durchgeschaltet worden.

Die anderen Gattergruppen wie beispielsweise 23, 24, 31 und 32 oder 27, 28, 35 und 37 lassen keinen Takt passieren. Sollte bedingt durch lange Laufzeiten ΔT bei den Laufzeitgliedern 3 bis 6 sowohl ein negativer als auch ein positiver Zustandswechsel erkannt werden, überlagern sich die beiden ausgewählten Takte, die in der Phasenlage jedoch annähernd gleich sind. Durch die NOR-Verknüpfung der Takte ist gewährleistet, daß kein Doppelimpuls auftritt. Es ergibt sich lediglich eine Verbreiterung der Pulsdauer des angepaßten Taktes CLK*.

An das ODER-Gatter 22 werden alle abgetakteten Takte Q1 bis Qn angelegt. Sollte, bedingt durch extrem kurze Verzögerungszeiten in den Laufzeitgliedern 3 bis 6, kein Zustandswechsel erkannt werden und alle abgetakteten Takte Q1 bis Qn einen logischen Zustand "L" haben, dann wird der verstärkte invertierte Takt CLKNn über die NOR-Gatter 30 und 38 zum Taktausgang 21 durchgeschaltet. Dem ODER-Gatter 29 werden alle invertierten abgetakteten Takte QN1 bis QHn zugeführt. Sollten auch hier ausnahmsweise alle invertierten abgetakteten Takte QN1 bis QNn einen logischen Zustand "L" aufweisen, dann wird der verstärkte Takt CLKn über die NOR-Gatter 37 und 38 zum Ausgang 21 durchgeschaltet.

Durch eine Verzögerung des Datensignals D1 im Laufzeitglied 17 wird die Laufzeit des ausgewählten Taktes durch die Verstärker 11 bis 16 und die Logik 18 ausgeglichen. Das verzögerte Datensignal D2 wird im D-Flipflop 19 mit dem Takt CLK* abgetaktet; am Datensignalausgang 20 erscheint das abgetaktete Datensignal D3.

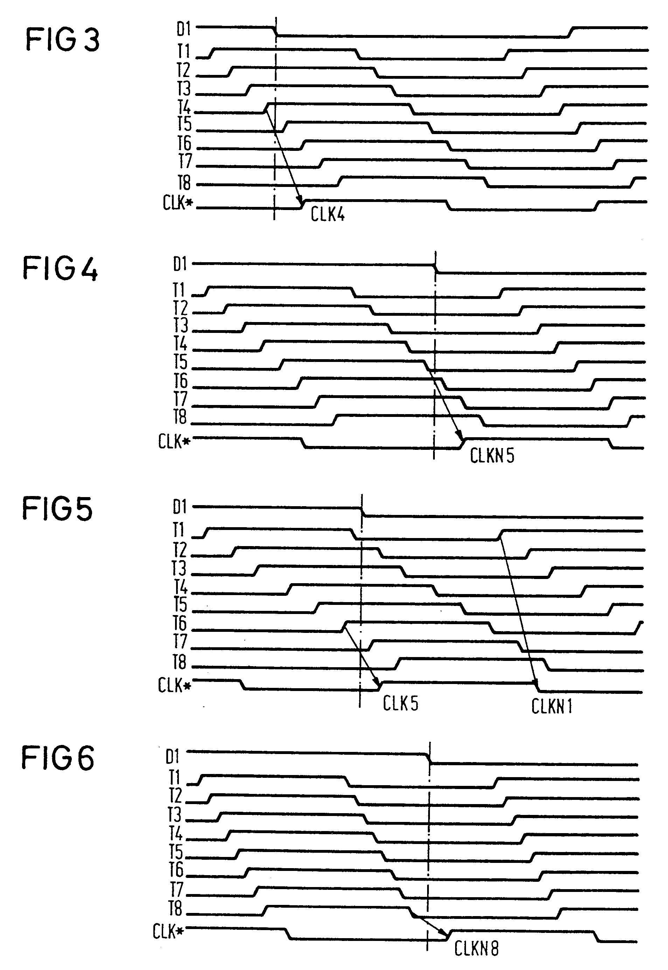

Die Figuren 3 bis 6 zeigen Pulsdiagramme für acht Takte T1 bis T8.

Fig.3 zeigt einen Fall, bei dem ein Zustandswechsel des Datensignals D1 mit einer positiven Taktflanke zusammenfällt. In diesem Fall wird der verstärkte Takt CLK4 ausgewählt.

Fig.4 zeigt einen Fall, bei dem ein Zustandswechsel des Datensignals D1 mit einer negativen Taktflanke zusammenfällt. Bei diesem Beispiel wird der invertierte verstärkte Takt CLKN5 ausgesucht.

Fig.5 zeigt einen Fall, bei dem ein Zustandswechsel des Datensignals D1 mit zwei Taktflanken zusammenfällt, nämlich den der Takte T1 und T5. Es wird sowohl der verstärkte Takt CLK5 als auch der invertierte verstärkte Takt CLKN1 ausgewählt.

Fig.6 zeigt schließlich einen Fall, bei dem der Zustandswechsel des Datensignals D1 mit keiner Flanke der Takte T1 bis T8 zusammenfällt. Dann wird der invertierte verstärkte Takt CLKN8 durchgeschaltet.

Die beschriebene Anordnung gewährleistet in allen Fällen ein sicheres Abtakten des plesiochronen Datensignals D1. Es kann kein Datenbit verloren gehen oder doppelt abgetaktet werden. Die Anordnung kann den Takt T1 sowohl in der Phasenlage als auch in der Frequenz an das Datensignal D1 anpassen. Durch die Beschränkung der Phasenabstände auf 60 % der Taktperiode reduziert sich der Schaltungsumfang erheblich.

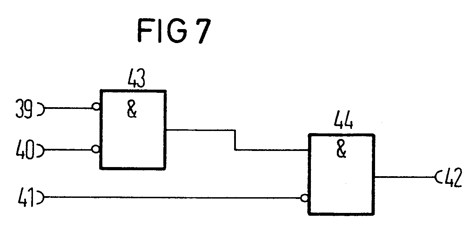

Fig.7 zeigt eine Anordnung mit einem UND-Gatter 43 mit zwei invertierenden Eingängen und mit einem UND-Gatter 44 mit einem invertierenden Eingang. Diese kann mit ihren Anschlüssen 39 bis 42 in Fig.2 eingesetzt beispielsweise das ODER-Gatter 25 und das NOR-Gatter 33 ersetzen. Dasselbe gilt für die Gatterkonfigurationen 22 und 30 bis 24 und 32 sowie 26 und 34 bis 29 und 37. Die invertierenden Eingänge des UHD-Gatters 43 und des UHD-Gatters 44 können entfallen, wenn die Verdrahtung zwischen den D-Flipflops 7 bis 11 und den Verstärkern 12 bis 16 zur Logik 18 entsprechend verändert wird.

Die Anordnung ist zur Integration, beispielsweise in einer bipolaren oder auch CMOS-Technologie insbesondere für Frequenzen oberhalb 100 MHz geeignet.

## Patentansprüche

1. Verfahren zur Anpassung eines Taktes (T1) mit beliebiger Phasenlage und einem Tastverhältnis 1:1 ± 10 % an ein plesiochrones spikefreies Datensignal (D1) und zum Abtakten des Datensignals mit einem angepaßten Takt (CLK*), bei dem eine mit dem Takt (T1) beginnende und mit Ordnungszahlen (n) versehene Folge von Takten (T1 bis Tn) gleicher Frequenz und unterschiedlicher Phasenlage bei gleichen Phasenabständen zwischen den einzelnen Takten verwendet wird,
**dadurch gekennzeichnet,**
- daß die Takte (T1 und Tn) mit jeder als wirksam bestimmten Flanke des Datensignals (D1) abgetaktet und die derart abgetakteten Takte (Q1 bis Qn) verstärkt werden,
- daß die abgetakteten Takte (Q1 bis Qn) und die verstärkten Takte (CLK1 bis CLKn) invertiert werden,
- daß durch Verknüpfungen der Takte (T1 bis Tn-1) der jeweils zugeordneten Ordnungszahl mit den Takten (T2 bis Tn) der jeweils nächsthöheren Ordnungszahl eine positive oder negative Taktflanke, die mit einem Zustandswechsel des Datensignals (D1) zusammenfällt, erkannt wird,
- daß in Abhängigkeit von der erkannten Taktflanke des Takts (z.B. T4 oder T5) der davon abgeleitete verstärkte Takt (z.B. CLK4) oder der zu dieser Phasenlage invertierte verstärkte Takt (z.B. CLKN5) als der angepaßte Takt (CLK*) ausgewählt wird, und
- daß bei Nichterkennen einer Taktflanke der verstärkte Takt (CLKn) oder der invertierte verstärkte Takt (CLKNn) mit der letzten Ordnungszahl als der angepaßte Takt (CLK*) ausgewählt wird.

2. Verfahren nach Anspruch 1,
**gekennzeichnet durch**
- eine erste logische Verknüpfung jedes abgetakteten Taktes (Q1 bis Qn-1) jeweils mit dem invertierten abgetakteten Takt (QN2 bis QNn) der nächsthöheren Ordnungszahl,
- eine zweite logische Verknüpfung jedes aus der ersten logischen Verknüpfung stammenden Signals jeweils mit dem verstärkten Takt (CLK1 bis CLKn-1) der Ordnungszahl des in die erste logische Verknüpfung eingebrachten abgetakteten Taktes (Q1 bis Qn-1),
- eine dritte logische Verknüpfung jedes invertierten abgetakteten Taktes (QN1 bis QNn-1) jeweils mit dem abgetakteten Takt (Q2 bis Qn) der nächsthöheren Ordnungszahl,
- eine vierte logische Verknüpfung jedes aus der dritten logischen Verknüpfung stammenden Signals jeweils mit dem invertierten verstärkten Takt (CLKN1 bis CLKNn-1) der Ordnungszahl des in die dritte logische Verknüpfung eingebrachten invertierten abgetakteten Taktes (QN1 bis QNn-1),
- eine fünfte logische Verknüpfung aller abgetakteten Takte (Q1 bis Qn),
- eine sechste logische Verknüpfung des aus der fünften logischen Verknüpfung stammenden Signals mit dem invertierten verstärkten Takt (CLKNn) der letzten Ordnungszahl,
- eine siebte logische Verknüpfung aller invertierten abgetakteten Takte (QN1 bis QNn),
- eine achte logische Verknüpfung des aus der siebten logischen Verknüpfung stammenden Signals mit dem verstärkten Takt (CLKn) der letzten Ordnungszahl,
- eine neunte logische Verknüpfung der aus der zweiten, vierten, sechsten und achten logischen Verknüpfung stammenden Signale, die den angepaßten Takt (CLK*) ergeben,
- Verzögerung des Datensignals (D1), die der Verzögerung bei der Gewinnung des angepaßten Taktes (CLK*) entspricht, und durch
- Abtakten des verzögerten Datensignals (D2) durch den angepaßten Takt (CLK*).

3. Anordnung zur Anpassung eines Taktes (T1) mit beliebiger Phasenlage und einem Tastverhältnis 1:1 ± 10 % an ein plesiochrones spikefreies Datensignal (D1) und zum Abtakten des Datensignals mit einem angepaßten Takt (CLK*), bei dem eine mit dem Takt (T1) beginnende und mit Ordnungszahlen (n) versehene Folge von Takten (T1 bis Tn) gleicher Frequenz und unterschiedlicher Phasenlage bei gleichen Phasenabständen zwischen den einzelnen Takten verwendet wird,
**dadurch gekennzeichnet,**
- daß die Takte (T1 bis Tn) auf die Dateneingänge (D) und das Datensignal (D1) auf die Takteingänge von flankengetriggerten D-Flipflops (7-11) mit jeweils einem invertierenden Ausgang (QN) und einem nicht invertierenden Ausgang (Q) geführt sind,
- daß die Takte (T1 bis Tn) Verstärkern (12-16) mit jeweils einem nicht invertierenden Ausgang (CLK1 bis CLKn) und einem invertierenden Ausgang (CLKN1 bis CLKNn) zugeführt sind,
- daß an die Ausgänge der D-Flipflops (7-11) und der Verstärker (12-16) eine Taktauswahllogik (18) angeschaltet ist, die aufweist:
- erste Schaltglieder (23,25,27) zur Verknüpfung der an den nicht invertierenden Ausgängen (Q1,Q2,Qn-1) der D-Flipflops (7,8,10) anliegenden abgetakteten Takte jeweils mit den an den invertierenden Ausgängen (QN2,QN3,QNn) der D-Flipflops (8,9,11) anliegenden abgetakteten Takte der nächsthöheren Ordnungszahl,
- an die ersten Schaltglieder (23,25,27) angeschaltete zweite Schaltglieder (31,33,35) zur Verknüpfung der an den Ausgängen der ersten Schaltglieder (23,25,27) anliegenden Signale jeweils mit den an den nicht invertierenden Ausgängen (CLK1,CLK2,CLKn-1) der Verstärker (12,13,15) anliegenden verstärkten Takte der Ordnungszahl der an den Eingängen der ersten Schaltglieder (23,25,27) anliegenden abgetakteten Takte,
- erste Schaltglieder (24,26,28) zur Verknüpfung der an den invertierenden Ausgängen (QN1,QN2,QNn-1) der D-Flipflops (7, 8,10) anliegenden abgetakteten Takte jeweils mit den an den nicht invertierenden Ausgängen (Q2,Q3,Qn) der D-Flipflops (8,9,11) anliegenden abgetakteten Takte der nächsthöheren Ordnungszahl,
- an die ersten Schaltglieder (24,26,28) angeschaltete zweite Schaltglieder (32,34,36) zur Verknüpfung der an den Ausgängen der ersten Schaltglieder (24,26,28) anliegenden Signale jeweils mit den an den invertierenden Ausgängen (CLKN1, CLKN2,CLKNn-1) der Verstärker (12,13,15) anliegenden invertierten Takten,
- erste Schaltglieder (22 und 29) zur Verknüpfung der an den nicht invertierenden Ausgängen (Q1 bis Qn) der D-Flipflops (7-11) anliegenden abgetakteten Takte und aller an den invertierenden Ausgängen (QN1-QNn) der D-Flipflops (7-11) anliegenden abgetakteten Taktet,
- an die ersten Schaltglieder (22 und 29) angeschaltete zweite Schaltglieder (30 und 37) zur Verknüpfung eines der beiden an den Ausgängen der ersten Schaltglieder (22 und 29) anliegenden Signale mit dem am invertierenden Ausgang (CLKNn) eines Verstärkers (16) anliegenden verstärkten Takt der letzten Ordnungszahl und eines der beiden Signale mit dem am nicht invertierenden Ausgang (CLKn) des Verstärkers (16) anliegenden verstärkten Takt der letzten Ordnungszahl,
- ein Ausgangsschaltglied (38) zur Durchschaltung eines der an den Ausgängen der zweiten Schaltglieder (30-37) anliegenden Signale als angepaßten Takt (CLK*),
- und daß ein Laufzeitglied (17) für die Verzögerung des Datensignals (D1), sowie ein an das Laufzeitglied (17) angeschaltetes flankengetriggertes D-Flipflop (19) für ein Abtakten des verzögerten Datensignals (D2) mit dem angepaßten Takt (CLK*) vorgesehen sind.

4. Anordnung nach Anspruch 3,
**dadurch gekennzeichnet,**
daß die ersten Schaltglieder (22-29) ODER-Gatter und die angeschalteten zweiten Schaltglieder (30-37) NOR-Gatter sind.

5. Anordnung nach Anspruch 3,
**dadurch gekennzeichnet,**
daß die ersten Schaltglieder (43) UND-Gatter mit invertierenden Eingängen (39,40) und die angeschalteten zweiten Schaltglieder (44) UND-Gatter mit jeweils einem invertierenden Eingang (41) für die verstärkten Takte (CLK1 bis CLKn bzw. CLKN1 bis CLKNn) sind.

6. Anordnung nach Anspruch 4 oder 5,
**dadurch gekennzeichnet,**
daß das Ausgangsschaltglied (38) ein NOR-Gatter ist.

7. Anordnung und einem der Ansprüche 4 bis 6,
**dadurch gekennzeichnet,**
daß die ersten und zweiten Schaltglieder durch Gatter gemäß den Umformungen nach de' Morgan realisiert sind.

8. Anordnung nach einem der Ansprüche 3 bis 7,
**dadurch gekennzeichnet,**
daß als Laufzeitglieder (3-6, 17) Verstärker oder Inverter vorgesehen sind.

9. Anordnung nach einem der Ansprüche 3 bis 8,
**gekennzeichnet durch**
eine Realisierung in bipolarer ECL-Technologie.

10. Anordnung nach einem der Ansprüche 3 bis 9,
**gekennzeichnet durch**
eine Verwendung bei Bitraten des Datensignals (D1) von 139,264 Mbit/s und 155,52 Mbit/s.

## Claims

1. Method for adapting a clock (T1) having an arbitrary phase relation and a pulse duty factor of 1:1 ± 10% to a plesiochronous spike-free data signal (D1) and for clocking the data signal with an adapted clock (CLK*), in which a sequence of clocks (T1 to Tn) of identical frequency and different phase relation and with identical phase spacings is used between the individual clocks, which sequence begins with the clock (T1) and is provided with ordinal numbers (n), characterized
- in that the clocks (T1 to Tn) are clocked by each edge of the data signal (D1) designated effective and the clocks (Q1 to Qn) that have been clocked in this manner are amplified,
- in that the clocked clocks (Q1 to Qn) and the amplified clocks (CLK1 to CLKn) are inverted,
- in that a positive or negative clock edge which coincides with a state change of the data signal (D1) is detected by gating the clocks (T1 to Tn-1) of the respective associated ordinal number with the clocks (T2 to Tn) of the respective next-higher ordinal number,
- in that, depending on the detected clock edge of the clock (e.g. T4 or T5), the amplified clock (e.g. CLK4) derived therefrom or the amplified clock (e.g. CLKN5) inverted with respect to this phase relation is selected as the adapted clock (CLK*), and
- in that if a clock edge is not detected, the amplified clock (CLKn) or the inverted amplified clock (CLKNn) with the last ordinal number is selected as the adapted clock (CLK*).

2. Method according to Claim 1, characterized by
- a first logical gating of each clocked clock (Q1 to Qn-1) with the inverted clocked clock (QN2 to QNn) of the next-higher ordinal number in each case,
- a second logical gating of each signal originating from the first logical gating with the amplified clock (CLK1 to CLKn-1) of the ordinal number of the clocked clock (Q1 to Qn-1) introduced into the first logical gating in each case,
- a third logical gating of each inverted clocked clock (QN1 to QNn-1) with the clocked clock (Q2 to Qn) of the next-higher ordinal number in each case,
- a fourth logical gating of each signal originating from the third logical gating with the inverted amplified clock (CLKN1 to CLKNn-1) of the ordinal number of the inverted clocked clock (QN1 to QNn-1) introduced into the third logical gating in each case,
- a fifth logical gating of all clocked clocks (Q1 to Qn),
- a sixth logical gating of the signal originating from the fifth logical gating with the inverted amplified clock (CLKNn) of the last ordinal number,
- a seventh logical gating of all inverted clocked clocks (QN1 to QNn),
- an eighth logical gating of the signal originating from the seventh logical gating with the amplified clock (CLKn) of the last ordinal number,
- a ninth logical gating of the signals originating from the second, fourth, sixth and eighth logical gating which produce the adapted clock (CLK*),
- delaying the data signal (D1) to an extent that corresponds to the delay for obtaining the adapted clock (CLK*), and by
- clocking the delayed data signal (D2) with the adapted clock (CLK*).

3. Arrangement for adapting a clock (T1) having an arbitrary phase relation and a pulse duty factor of 1:1 ± 10% to a plesiochronous spike-free data signal (D1) and for clocking the data signal with an adapted clock (CLK*), in which a sequence of clocks (T1 to Tn) of identical frequency and different phase relation and with identical phase spacings is used between the individual clocks, which sequence begins with the clock (T1) and is provided with ordinal numbers (n), characterized
- in that the clocks (T1 to Tn) are fed to the data inputs (D) and the data signal (D1) is fed to the clock inputs of edge-triggered D flip-flops (7-11) having one inverting output (QN) and one non-inverting output (Q) in each case,
- in that the clocks (T1 to Tn) are supplied to amplifiers (12-16) having one non-inverting output (CLK1 to CLKn) and one inverting output (CLKN1 to CLKNn) in each case,
- in that connected to the outputs of the D flip-flops (7-11) and of the amplifiers (12-16) is a clock selection logic element (18) which has:
- first logic gates (23, 25, 27) for gating the clocked clocks present at the non-inverting outputs (Q1, Q2, Qn-1) of the D flip-flops (7, 8, 10) with the clocked clocks of the next-higher ordinal number present at the inverting outputs (QN2, QN3, QNn) of the D flip-flops (8, 9, 11) in each case,
- second logic gates (31, 33, 35) connected to the first logic gates (23, 25, 27) for gating the signals present at the outputs of the first logic gates (23, 25, 27) with the amplified clocks of the ordinal number of the clocked clocks present at the inputs of the first logic gates (23, 25, 27), which amplified clocks are present at the non-inverting outputs (CLK1, CLK2, CLKn-1) of the amplifiers (12, 13, 15) in each case,
- first logic gates (24, 26, 28) for gating the clocked clocks present at the inverting outputs (QN1, QN2, QNn-1) of the D flip-flops (7, 8, 10) with the clocked clocks of the next-higher ordinal number present at the non-inverting outputs (Q2, Q3, Qn) of the D flip-flops (8, 9, 11) in each case,
- second logic gates (32, 34, 36) connected to the first logic gates (24, 26, 28) for gating the signals present at the outputs of the first logic gates (24, 26, 28) with the inverted clocked clocks present at the inputs of the first logic gates (24, 26, 28) which are present at the inverting outputs (CLKN1, CLKN2, CLKNn-1) of the amplifiers (12, 13, 15) in each case,
- first logic gates (22 and 29) for gating the clocked clocks present at the non-inverting outputs (Q1 to Qn) of the D flip-flops (7-11) and all the clocked clocks present at the inverting outputs (QN1-QNn) of the D flip-flops (7-11),
- second logic gates (30 and 37) connected to the first logic gates (22 and 29) for gating one of the two signals present at the outputs of the first logic gates (22 and 29) with the amplified clock of the last ordinal number present at the inverting output (CLKNn) of an amplifier (16) and one of the two signals with the amplified clock of the last ordinal number present at the non-inverting output (CLKn) of the amplifier (16),
- an output logic gate (38) for connecting through one of the signals present at the outputs of the second logic gates (30-37) as adapted clock (CLK*),
- and in that a delay unit (17) for delaying the data signal (D1) and also an edge-triggered D flip-flop (19) connected to the delay unit (17) are provided for clocking the delayed data signal (D2) with the adapted clock (CLK*).

4. Arrangement according to Claim 3, characterized in that the first logic gates (22-29) are OR gates and the connected second logic gates (30-37) are NOR gates.

5. Arrangement according to Claim 3, characterized in that the first logic gates (43) are AND gates with inverting inputs (39, 40) and the connected second logic gates (44) are AND gates with one inverting input (41) in each case for the amplified clocks (CLK1 to CLKn and CLKN1 to CLKNn respectively).

6. Arrangement according to Claim 4 or 5, characterized in that the output logic gate (38) is a NOR gate.

7. Arrangement according to one of Claims 4 to 6, characterized in that the first and second logic gates are realized by gates in accordance with the De Morgan transformations.

8. Arrangement according to one of Claims 3 to 7, characterized in that amplifiers or inverters are provided as delay units (3-6, 17).

9. Arrangement according to one of Claims 3 to 8, characterized by a realization in bipolar ECL technology.

10. Arrangement according to one of Claims 3 to 9, characterized by utilization for bit rates of the data signal (D1) of 139.264 Mbit/s and 155.52 Mbit/s.

## Revendications

1. Procédé pour adapter une cadence (T1) possédant une position de phase quelconque et un taux d'impulsions 1:1 ± 10 % à un signal de données plésiochrone (D1) sans pointes et synchroniser le signal de données sur une cadence de données (CLK*), selon lequel on utilise une suite d'impulsions de cadence (T1 à Tn) possédant la même fréquence et des positions de phase différentes et qui commencent avec l'impulsion de cadence (T2) et comportent des numéros d'ordre (n), et ce avec des déphasages identiques entre les différentes impulsions de cadence,
caractérisé par le fait
- que les impulsions de cadence (T1 à Tn) sont synchronisées sur chaque flanc, déterminé comme étant actif, du signal de données (D1) et les impulsions de cadence (Q1 à Qn) synchronisées de cette manière, sont amplifiées,
- que les impulsions de cadence synchronisées (Q1 à Qn) et les impulsions de cadence amplifiées (CLK1 à CLKn) sont inversées,
- qu'un flanc positif ou négatif d'une impulsion de cadence qui coïncide avec un changement d'état du signal de données (T1), est identifié au moyen de combinaisons des impulsions de cadence (T1 à Tn-1) possédant le numéro d'ordre respectivement associé, avec les impulsions de cadence (T2 à Tn) possédant le numéro d'ordre respectivement immédiatement supérieur,
- qu'en fonction du flanc identifié de l'impulsion TK (par exemple T4 ou T5), est sélectionnée l'impulsion de cadence amplifiée (par exemple CL4), qui en est dérivée ou bien l'impulsion de cadence amplifiée (par exemple CLKN5), qui est inversée par rapport à cette position de phase, en tant qu'impulsion de cadence adaptée (CLK*), et
- qu'en cas de non-identification d'un flanc d'une impulsion de cadence, l'impulsion de cadence amplifiée (CLKn) ou l'impulsion de cadence amplifiée inversée (CLKN) auquel est associé le dernier numéro d'ordre est sélectionnée en tant qu'impulsion de cadence adaptée (CLK*).

2. Procédé suivant la revendication 1, caractérisé par
- une première combinaison logique de chaque impulsion de cadence synchronisée (Q1 à Qn-1) avec l'impulsion de cadence synchronisée et inversée (QN2 à QNn) possédant le numéro d'ordre immédiatement supérieur,
- une seconde combinaison logique de chaque signal fourni par la première combinaison logique, respectivement à l'impulsion de cadence amplifiée (CLK1 à CLKn-1) possédant le numéro d'ordre de l'impulsion de cadence synchronisée (Q1 à Qn-1) introduite dans la première combinaison logique,
- une troisième combinaison logique de chaque impulsion de cadence inversée et synchronisée (QN1 à QNn-1) respectivement avec l'impulsion de cadence délivrée (Q2 à Qn) possédant le numéro d'ordre immédiatement supérieur,
- une quatrième combinaison logique de chaque signal produit par la troisième combinaison logique, respectivement avec l'impulsion de cadence amplifiée et inversée (CLK1 à CLKN-n-1) possédant le numéro d'ordre de l'impulsion de cadence inversée et synchronisée (QN1 à QNn-1) insérée dans la troisième combinaison logique,
- une cinquième combinaison logique de toutes les impulsions de cadence synchronisées (Q1 à Qn),
- une sixième combinaison logique du signal fourni par la cinquième combinaison logique, avec l'impulsion de cadence amplifiée et inversée (CLKNn) possédant le dernier numéro d'ordre,
- une septième combinaison logique de toutes les impulsions de cadence inversées et synchronisées (QN1 à QNn),
- une huitième combinaison logique du signal fourni par la septième combinaison logique, avec l'impulsion de cadence amplifiée (CLKn) possédant le dernier numéro d'ordre,
- une neuvième combinaison logique des signaux fournis par les seconde, quatrième, sixième et huitième combinaisons logiques et qui produisent l'impulsion de cadence adaptée (CLK*),
- un retard du signal de données (D1), qui correspond au retard lors de l'obtention de l'impulsion de cadence adaptée (CLK*), et
- une synchronisation du signal de données retardé (D2) par l'impulsion de cadence adaptée (CLK*).

3. Dispositif pour adapter une cadence (T1) possédant une position de phase quelconque et un taux d'impulsions 1:1 ± 10 % à un signal de données plésiochrone (D1) sans pointes et synchroniser le signal de données avec une cadence de données (CLK*), selon lequel on utilise une suite d'impulsions de cadence (T1 à Tn) possédant la même fréquence et des positions de phase différentes et qui commencent avec l'impulsion de cadence (T2) et comportent des numéros d'ordre (n), et ce avec des écarts du même déphasage entre les différentes impulsions de cadence,
caractérisé par le fait
- que les impulsions de cadence (T1 à Tn) sont envoyées aux entrées de données (D) et le signal de données (D1) est envoyé aux entrées de cadence de bascules bistables de type D (7-11) déclenchées par les flancs d'impulsions et comportant respectivement une sortie inverseuse (QN) et une sortie non inverseuse (Q),
- que les impulsions de cadence (T1 à Tn) sont envoyées à des amplificateurs (12-16) comportant chacun une sortie non inverseuse (CLK1 à CLKn) et une sortie non inverseuse (CLKN1 à CLKNn),
- qu'aux sorties des bascules bistables de type D (7-11) et des amplificateurs (12 - 16) est raccordée une logique (18) de sélection d'impulsions de cadence, qui comporte :
- des premiers circuits (23,25,27) pour combiner les impulsions de cadence synchronisées, qui sont appliquées aux sorties non inverseuses (Q1, Q2, Qn-1) des bascules bistables de type D (7, 8, 10), respectivement aux impulsions de cadence synchronisées, qui possèdent le numéro d'ordre immédiatement supérieur et sont appliquées aux sorties inverseuses (QN2, QN3, QNn) des bascules bistables de type D (8, 9, 11),
- des seconds circuits (31, 33, 35) qui sont connectés aux premiers circuits (23, 25, 27) pour combiner les signaux appliqués aux sorties des premiers circuits (23, 25, 27) respectivement aux impulsions de cadence amplifiées, qui sont appliquées aux sorties non inverseuses (CLK1, CLK2, CLKn-1) des amplificateurs (12, 13, 15) et possèdent le numéro d'ordre des impulsions de cadence synchronisées, appliquées aux entrées des premiers circuits (23, 25, 27),
- des premiers circuits (24, 26, 28) pour combiner les impulsions de cadence synchronisées, qui sont appliquées aux sorties inverseuses (QN1, QN2, QNn-1) des bascules bistables de type D (7, 8, 10), respectivement aux impulsions de cadence délivrées, qui possèdent le numéro d'ordre immédiatement supérieur et sont appliquées aux sorties non inverseuses (Q2, Q3, Qn) des bascules bistables de type D (8, 9, 11),
- des seconds circuits (32, 34, 36), qui sont connectés aux premiers circuits (24, 26, 28) pour combiner les signaux appliqués aux sorties des premiers circuits (24, 26, 28) respectivement aux impulsions de cadence délivrées et inversées, qui sont appliquées aux sorties inverseuses (CLKN1, CLKN2, CLKNn-1) des amplificateurs (12, 13, 15), des premiers circuits (24, 26, 28),
- des premiers circuits (22 et 29) servant à combiner les impulsions de cadence synchronisées, qui sont appliquées aux sorties non inverseuses (Q1 à Qn) des bascules bistables de type D (7 - 11), et toutes les impulsions de cadence synchronisées, qui sont appliquées aux sorties inverseuses (QN1 - QNn) des bascules bistables de type D (7 -11),
- des seconds circuits (30 et 37), qui sont raccordés aux premiers circuits (22 et 29) pour combiner l'un des deux signaux appliqués aux sorties des premiers circuits (22 et 29), à l'impulsion de cadence amplifiée, qui possède le dernier numéro d'ordre et est appliquée à la sortie inverseuse (CLKNn) d'un amplificateur (16), et combiner l'un des deux signaux à l'impulsion de cadence amplifiée, qui est appliquée à la sortie non inverseuse (CLKn) de l'amplificateur (16) et possède le dernier numéro d'ordre,
- un circuit de sortie (38) pour transmettre directement l'un des signaux, qui sont délivrés sur les sorties des seconds circuits (30 - 37), en tant qu'impulsion de cadence adaptée (CLK*),
- et qu'il est prévu un circuit de retardement (17) servant à retarder le signal de données (D1), ainsi qu'une bascule bistable de type D (19), qui est raccordée au circuit de retardement (17) et est déclenchée par les flancs d'impulsions, pour une synchronisation du signal de données retardé (D2) sur l'impulsion de cadence adaptée (CLK*).

4. Dispositif suivant la revendication 3, caractérisé par le fait que les premiers circuits (22 - 29) sont des portes OU et que les seconds circuits raccordés (30 - 37) sont des portes NON-OU.

5. Dispositif suivant la revendication 3, caractérisé par le fait que les premiers circuits (43) sont des portes ET comportant des entrées inverseuses (39, 40) et que les seconds circuits raccordés (44) sont des portes ET comportant chacun respectivement une entrée inverseuse (41) pour les impulsions de cadence amplifiées (CLK1 à CLKn ou CLKN1 à CLKNn).

6. Dispositif suivant la revendication 4 ou 5, caractérisé par le fait que le circuit de sortie (38) est une porte NON-OU.

7. Dispositif suivant l'une des revendications 4 à 6, caractérisé par le fait que les premier et second circuits sont constitués par des portes conformément aux transformations selon de' Morgan.

8. Dispositif suivant l'une des revendications 3 à 7, caractérisé par le fait que des amplificateurs ou des inverseurs sont prévus comme circuits de retardement (3 - 6, 17).

9. Dispositif suivant l'une des revendications 3 à 8, caractérisé par une réalisation selon la technologie ECL bipolaire.

10. Dispositif suivant l'une des revendications 3 à 9, caractérisé par une utilisation dans le cas de cadences binaires du signal de données (D1) de 139,264 Mbits/s et 155,52 Mbits/s.
